**Europäisches Patentamt**

**European Patent Office**

**Office européen des brevets**

(11) Veröffentlichungsnummer: **0 291 883**
**A2**

## (12) EUROPÄISCHE PATENTANMELDUNG

(21) Anmeldenummer: 88107733.3

(22) Anmeldetag: 13.05.88

(51) Int. Cl.4: **B01D 25/26** , **B01D 13/00**

(30) Priorität: 16.05.87 DE 3716534

(43) Veröffentlichungstag der Anmeldung:
23.11.88 Patentblatt 88/47

(84) Benannte Vertragsstaaten:
**CH DE FR GB LI**

(71) Anmelder: **Sartorius GmbH.**
**Weender Landstrasse 94-108**
**D-3400 Göttingen(DE)**

(72) Erfinder: **Hoffmann, Jürgen, Dr.**
**Gartenstrasse 21**
**D-3414 Hardegsen-Ellierode(DE)**

(74) Vertreter: **Köhler, Rudolf**
**c/o Sartorius GmbH Weender Landstrasse**
**94-108**
**D-3400 Göttingen(DE)**

(54) **Filtermodul aus Schichtenfilterelementen.**

(57) Das Filtermodul (FM) besteht aus zwei Reihen bzw. zwei Stapel Filterzuschnitten (16) aus sogenannten Filterschichten (FS) und dazwischen angeordneten Stützelementen (17) in Form von relativ grobem Kunststoffgewebe- oder Kunststoffgitter-Abschnitten (17) mit drainierender Wirkung. Jeweils zwei benachbarte Filterzuschnitte (16) und dazwischenliegendes Stützelement (17) sind durch ein Dichtungselement (32) in Form einer im Flüssigzustand aufgebrachten und aushärtbaren Kunststoffmasse eingefaßt, während die gegenuberliegende Kante der beiden außenseitig verbundenen Filterzuschnitte (16) in der Ebene des Stützelementes (17) zum inneren Fluidraum (14') offenbleibt. Entsprechend sind alternierend zick-zackförmig auf beiden Seiten die Kanten abgedichtet bzw. in der Ebene der Stützelemente (17) zum Fluidraum (19) eines umgebenden Gehäuses (9) bzw. zum inneren Fluidraum (14') des Filtermoduls (FM) offengelassen. Zwei Stapel sind mit Abstand zur Bildung des inneren Fluidraumes (14') über seitliche Abschlußelemente (22) und obere und untere Verbindungsplatten (27) zu einem quaderförmigen oder säulenförmigen Hohlkörper verbunden und können über Anschlußadapter an den Verbindungsplatten (27) sowohl in der einen Richtung als auch in der anderen Richtung mit zu filtrierendem Fluid, Spülmittel, Prüfmittel, Heißwasser oder Gas beschickt werden. Das aus Filterschichten (FS) aufgebaute Filterelement kann auch in Verbindung mit integrierten Filtermaterialien (18) auf Membran- und/oder Vliesbasis betrieben werden. In die Dichtungselemente (32) können auch Abstandshalter (31) mit Durchlässen (29) integriert sein.

Fig. 1

## Filtermodul aus Schichtenfilterelementen

Die Erfindung betrifft ein Filtermodul aus flachen, randseitig abgedichteten, gestapelten Schichtenfilterelementen mit drainierenden Stutzschichten, welches in ein Gehäuse mit Versorgungs- und Entsorgungsanschlüssen derart einsetzbar ist, daß Fluid von einem Fluidraum in einen anderen Fluidraum nur durch die Filterelemente gelangen kann.

Nach dem Stand der Technik bestehen sogenannte Schichtenfilter oder Filterschichten aus organischen und anorganischen, faserigen und körnigen Stoffen. Als Rohstoffe für derartige Filterschichten werden heute folgende Produkte verwendet und zwar Holzzellulosen, Baumwollzellulose, Kunststoff-Fasern, Kieselgur, Perlite, γ-Alu-Oxid und Kaolin.

Kieselguren und Perlite werden den Schichten zur Auflockerung des Schichtgefüges und somit zur Vergrößerung des Trubvolumens zugesetzt. Da Kieselguren und Perlite mehlig sind, schwächen sie die mechanische Festigkeit einer solchen Schicht.

Filterschichten werden zur Filtration, zur Klärung und Behandlung von Flüssigkeiten in der gesamten Getränkeindustrie verwendet und werden auch im Pharmabereich und in der chemischen Industrie eingesetzt, weil sie anerkannte Vorteile haben. Die Filterschichten haben neben einer Siebwirkung, mit der grobe Teilchen auf der Oberfläche der Filterschicht liegenbleiben und nicht in die Poren eindringen, auch eine Tiefenwirkung für feine Teilchen, welche sich in den Poren infolge von Rauhigkeit, Richtungswechsel usw. verfangen. Daneben besitzen diese Filterschichten eine Adsorptionswirkung, die darin besteht, daß sehr feine Teilchen durch Adsorption festgehalten werden. Die Adsorptionskapazität der Filterschichten ist jedoch beschränkt. Diese drei Grundwirkungen sind Materialeigenschaften der Rohstoffe Zellulose, Baumwolle und Kieselgur und weiteren zugesetzten Materialien. Die Filterschichten sind im trockenen Zustand relativ spröde und brüchig. Die Oberfläche ist zumeist durch eine wäßrige Kunststofflösung derart nachbehandelt, daß im trockenen und feuchten Zustand sich keine faserigen Teilchen ablösen. Im nassen Zustand sind die Filterschichten jedoch relativ weich und neigen zum Quellen.

Diese Filterschichten werden üblicherweise in sogenannten Schichtenfiltergeräten bzw. Filterpressen durch Einklemmen zwischen Filterplatten oder Filterrahmen betrieben.

Des weiteren werden modifizierte (dünne) Filterschichten in Filtermodulen eingesetzt, die tellerartig aufgebaut sind und aus einer speziellen Drainageplatte aus Kunststoffspritzteilen und beidseitig belegten Filterschichten gebildet sind, die an einem Mittelrohr aufeinandergestapelt und in einem Filtergehäuse eingeschlossen sind. Die diskusförmigen Filterschichten auf jeder Filterplatte werden sowohl im Bereich des Mittelrohres als auch an der Peripherie durch Klemm- und Dichtungsglieder aus Kunststoffspritzteilen gehalten.

Dadurch, daß die Filterschichten aber selbst keine thermoplastische Eigenschaften haben, ist eine sichere direkte Verschweißung nicht möglich. Bei handelsüblichen Schichtenfiltermodulen dieser Art wird deshalb z.B. der äußere Umfangsbereich der speziellen Drainageplatte so ausgebildet, daß er als Schweißmedium dient, welches z.B. durch Ultraschall verflüssigt werden kann und unter Druck mit den Oberflächen der beiden Filterschichtenränder dichtend verankert wird. Ähnlich wie bei einer flächigen Verklebung ist diese Art der Dichtung, insbesondere wegen des Quellverhaltens und der geringen Naßfestigkeit dieser Schichtenfilter und der rein oberflächigen Verankerung wenig stabil. Deshalb sind zumeist relativ aufwendige Dichtungs-Klemmen-und Stützkonstruktionen aus Kunststoffteilen notwendig, die die Herstellung dieser Module gleichermaßen verteuern und komplizieren und eine dichte Packung verhindern. Trotz dieser Sicherheitselemente sind diese Filterelemente sehr anfällig bei Fehlbedienung wie Druckstößen und können nur in einer Filtrationsrichtung betrieben werden. Ein Nachteil der bekannten Schichtenfiltermodule ist deshalb auch darin zu sehen, daß eine Rückspülung der Filterelemente zur Entfernung eines gebildeten Filterkuchens nicht möglich ist.

Wenn die Filterschichten nur einseitig abgestützt sind, wie es beispielsweise durch die EP-OS 179 495 bekannt ist, wird die Empfindlichkeit gegenüber Pulsationen und Rückstößen noch größer.

Der Siebeffekt der Filterschichten hält je nach Rezeptur und Dicke durch die große innere Oberfläche Kieselgur, Partikel, Hefen und auch kleinere Mikroorganismen auch unter 1 um zurück. Die Tiefenwirkung und der Adsorptionseffekt halten zudem feinste Trubstoffe und Kolloide bis unter 1 um zurück. Bei einer sogenannten Sterilschicht reicht die Porengröße - sofern man bei einem drei-dimensionalen Gebilde davon sprechen kann - aus, um Bakterien um 0,45 um zurückzuhalten, wenn bestimmte Vorschriften (Flußrate, Vermeidung von Druckstößen, regelmäßige Sterilisation, Austausch bei Druckanstieg usw.) eingehalten werden. Bei Nichtbefolgen bzw. Fehlbehandlung oder Fehlbedienung brechen jedoch Tiefenfilter dieser Art gelegentlich durch, d.h. die gewünschte Rückhaltung ist nicht mehr gesichert und bereits zurückgehaltene Teilchen werden wieder in das Filtrat abgegeben.

Derartigen Schichtenfiltern oder Modulen aus Schichtenfilterelementen wird deshalb stromabwärts auf der Sterilseite häufig noch ein Membranfilter feinerer Porengröße mit echter Siebwirkung gegenüber Partikeln und Organismen nachgeschaltet. Bei diesen Membranfiltern handelt es sich um sehr viel elastischere Materialien, so daß derartige Module zumeist in Kerzenbauweise, z.B. als plissierter Membranfilter ausgebildet sind, dessen Plissierung zu einem Hohlzylinder geformt und stirnseitig mit Anschlußadaptern verbunden ist.

Der Erfindung liegt daher die Aufgabe zugrunde, mit einfachen Mitteln für Filterschichten eine dauerhafte Dichtungsform für zu verbindende, übereinanderliegende Materialkanten und danach aufgebaute Filtermodule zu erstellen. Diese Module sollen aus einfachen Grundelementen herstellbar und sehr dicht gepackt, in zwei Filtrationsrichtungen betreibbar sein sowie die Integration von Membranfiltern oder anderen Filtermaterialien erlauben und in geschlossene Filtrationsgehäuse einbaubar sein.

Diese Aufgabe wird erfindungsgemäß dadurch gelöst, daß das Dichtungselement durch eine im Flüssigzustand aufgebrachte und aushärtbare Kunststoffmasse gebildet ist, welche die zu verbindenden übereinanderliegenden Ränder des Filtermaterials, ggf. unter Zwischenlage von handelsüblichen drainierenden Stütz- und Anströmschichten und weiteren Filtrationsschichten im Querschnitt etwa U-förmig einfaßt und mit den Rändern eine dauerhafte, insbesondere wasserfeste Verbindung eingeht. So gebildete Grundeinheiten werden mit den gleichen Dichtungselementen zu größeren Modulen aufgebaut.

Ein mit derartigen Filterschichten aufgebautes Filtermodul ist aus einer Vielzahl von aufeinandergestapelten Rechteckzuschnitten, mit dazwischen angeordneten handelsüblichen drainierenden Stütz- und Anströmschichten aus Kunststoffgitter, Kunststoffgewebe, Kunststoffvliesen oder geprägten gelochten Folien gebildet sein, welche wechselweise an den benachbarten übereinander liegenden Ränder durch die Kunststoffmasse I-förmig, C-förmig, V-förmig, E-förmig oder U-förmig derart eingefaßt sind, daß zick-zack-förmig auf beiden Seiten offene Taschen gebildet sind, in die das Fluid auf einer Seite einströmt, durch das Filtermaterial dringt und auf der anderen Seite aus den Taschen gefiltert ausströmt. Die Form der Einfassung hängt davon ab, wie dicht und fest die Struktur der Kantenflächen nach einem Stanz- oder Fräsvorgang nach dem Zuschneiden der Filterzuschnitte ist.

Entlang der Dichtungselemente angeformte Abstandshalter aus Kunststoffmasse mit Durchlässen können auf der Anstromseite die drainierenden Anstromschichten bei geringer Taschentiefe und guter Eigenfestigkeit der Filterschichten ersetzen und bei größerer Taschentiefe ergänzen.

Zur Bildung eines quaderförmigen Filtermoduls aus handelsüblichen Filterschichten werden mittels vorstehend beschriebenen Dichtungselementen zwei im parallelen Abstand zueinander angeordnete Rechteckquader geschaffen, die an beiden Stapelendflächen durch je eine Verbindungsplatte mit mehr als der doppelten Breite der Filterzuschnitte aus demselben Material oder einem dichten Kunststoff mit dem beschriebenen Dichtungselement miteinander verbunden werden, so daß ein innerer Fluidraum entsteht. Die Stirnseiten des so gebildeten Rechteckquaders mit innerem Fluidraum werden mittels Vergußmassen wie Polypropylen, Polyurethan, Silikon, aufgeschmolzenem Kunststoff und dgl. in einem weiteren Schritt nach dem gleichen Prinzip mit je einer Verbindungsplatte abgedichtet wie die Stapelendflächen, wobei der innere Fluidraum in mindestens eine Öffnung an der Stirnseite mündet, über die das Fluid zu- oder abfließen kann.

Der Erfindungsgedanke ist in mehreren Ausführungsbeispielen anhand der beiliegenden Zeichnung näher erläutert. Dabei zeigt:

Fig. 1,. 2A, 3A und 4 schematische Querschnitte durch jeweils zwei übereinandergestapelte Zuschnitte von Filterschichten mit Drainageschichten und einseitiger Randverbindung als vorgefertigte Grundelemente,

Fig. 2B und 3B Frontansichten gemäß Fig. 2A und 3A

Fig. 5 einen schematischen perspektivischen Querschnitt durch ein aus solchen Grundelementen gemäß Fig. 1 zusammengesetztes quaderförmiges Filtermodul,

Fig. 6 einen Detail-Querschnitt durch ein abgewandeltes Filtermodul,

Fig. 7 einen Querschnitt durch ein abgewandeltes Filtermodul gemäß Fig. 5 nach der Schnittlinie 7-7 in Fig. 8 und 9, eingesetzt in ein umgebendes Filtergehäuse,

Fig. 8 einen Vertikalschnitt durch das Filtermodul gemäß Fig. 7 nach der Schnittlinie 8-8,

Fig. 9 einen Vertikalschnitt durch das Filtermodul gemäß Fig. 7 nach der Schnittlinie 9-9,

Fig. 10 einen Querschnitt durch einen modifizierten Schichtenaufbau unter zusätzlicher Verwendung von faltbaren Flächenzuschnitten,

Fig. 11 einen Querschnitt durch eine abgewandelte Randabdichtung für die einzelnen Filterschichten,

Fig. 12 schematisch und vereinfacht einen Querschnitt durch ein abgewandeltes bevorzugtes Filtermodul mit Gehäuse nach der Linie 12-12 in Fig. 13

Fig. 13 einen Vertikalschnitt durch das Filtermodul mit Gehäuse nach der Linie 13-13 in Fig. 12,

Fig. 14 in schematischer Perspektivansicht ein quaderförmiges Filtermodul,

Fig. 15 in schematischer Perspektivansicht mehrere übereinandergestapelte und strömungstechnisch verbundene Filtermodule,

Fig. 16 einen Vertikalschnitt durch ein Filtergehäuse aus Edelstahl mit zwei eingesetzten, lösbar verbundenen Filtermodulen und

Fig. 17 eine Perspektivansicht eines Filtermoduls in Form einer flachen Kassette mit Tragrahmen, einsetzbar in ein herkömmliches Schichtenfiltergerät.

Die nachfolgenden Ausführungsbeispiele beziehen sich auf Filterschichten FS (synonym: Schichtenfilter), wie sie von einer Vielzahl von Herstellern derzeit im Handel erhältlich sind und wie sie eingangs näher definiert sind.

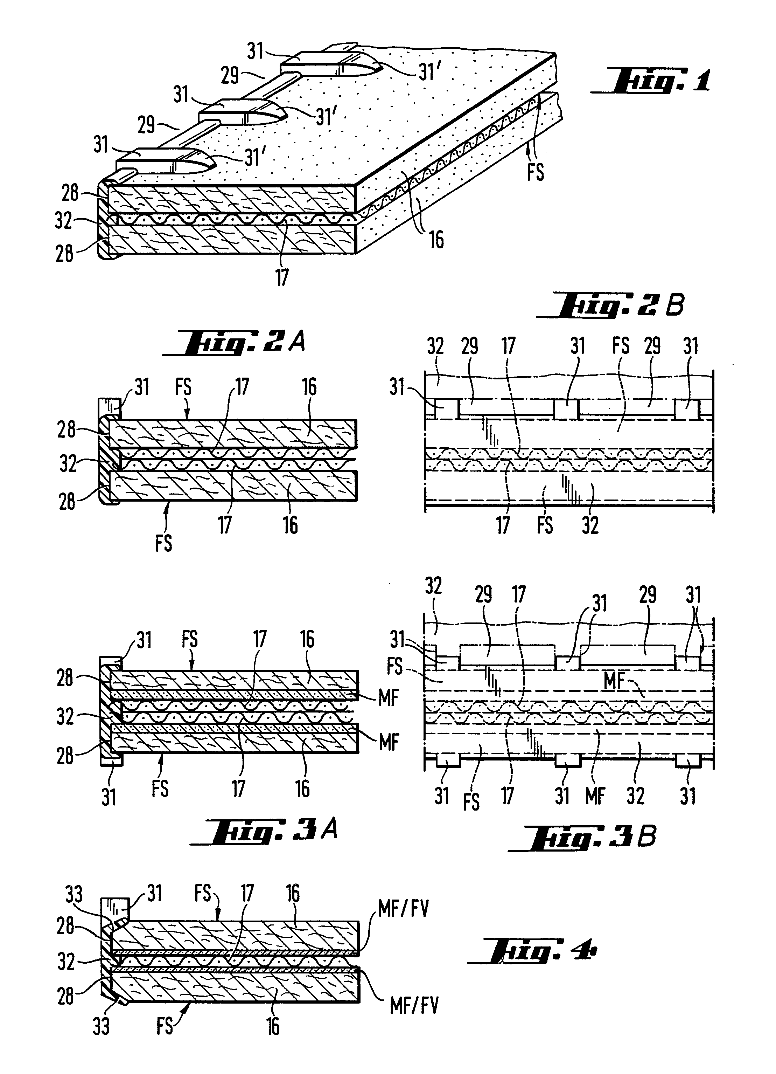

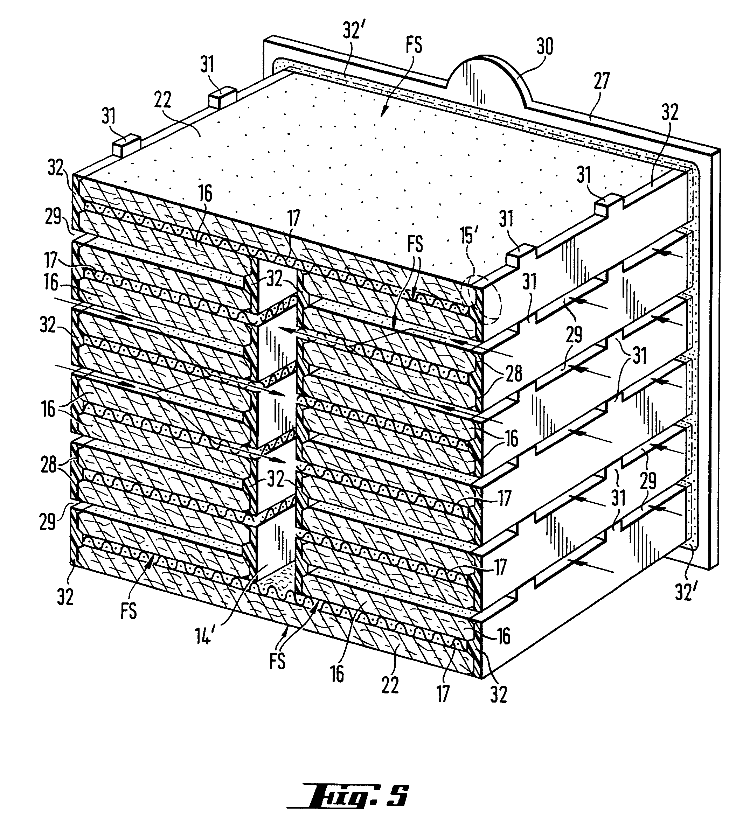

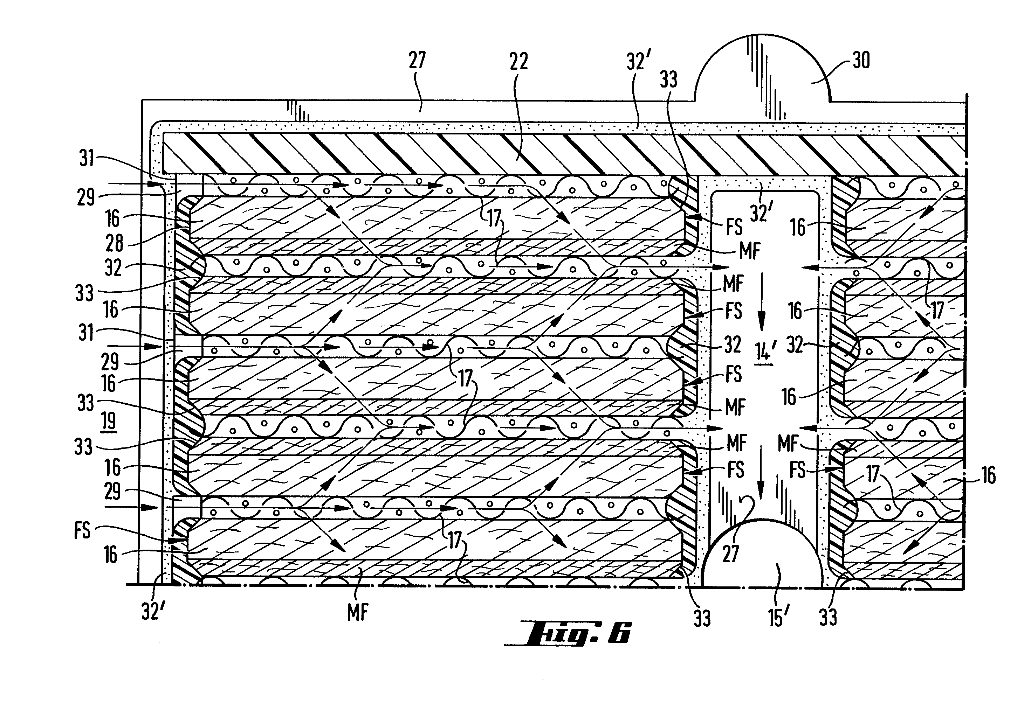

Die Filtermodule gemäß Fig. 5 bis 16 sind im wesentlichen aus den Grundeinheiten nach Fig. 1 bis 4 zusammengebaut. Diese Grundeinheiten bestehen aus zwei rechteckigen Filterzuschnitten 16 aus Filterschichten FS und den diese Filterzuschnitte 16 in Abstand von benachbarten Filterzuschnitten haltenden drainierenden Stützelementen 17. Diese Stützelemente 17 - ebenfalls in rechteckiger Zuschnittform - können gebildet sein durch strukturierte und perforierte Folien, Kunststoffspritzteile, Kunststoffgitter und Kunststoffgewebe und sind in unterschiedlicher Stärke, Struktur, einlagig oder mehrlagig zwischen benachbarten Filterzuschnitten 16 angeordnet. Bei der Anordnung nach Fig. 4 weist die Filterschicht FS auf der Permeatseite ein lose aufliegendes oder auflaminiertes Membranfilter MF oder ein Filtervlies FV auf. Der die Grundelemente bildende Schichtenaufbau ist einseitig durch eine im Flüssigzustand aufgebrachte und aushärtbare Kunststoffmasse 32 abgedichtet, welche die zu verbindenden übereinanderliegenden Ränder 28 des Filtermaterials 16, gegebenenfalls unter Verankerung der drainierenden Stützschichten 17 und weiterer Filterschichten MF/FV im Querschnitt etwa I-förmig, C-förmig, V-förmig, E-förmig oder U-förmig einfaßt und mit diesen Rändern eine dauerhafte naßfeste Verbindung eingeht und das eigentliche Dichtungselement 32 bildet. Mehrerer solcher Grundeinheiten z.B. gemäß Fig. 1 werden übereinandergestapelt und anschließend auf der linken Seite ebenfalls durch Dichtungselemente 32 derart verbunden, daß gemäß Fig. 5 bzw. Fig. 6 eine zick-zack-förmige Verbundgeometrie entsteht. Zwei solcher etwa im parallelen Abstand von einander angeordneten Stapel werden gemäß Fig. 5 beidseitig durch ein Abschlußelement 22, welches gemäß Fig. 5 eine Filterschicht ist, abgeschlossen und miteinander verbunden. Die beiden offenen Stirnseiten werden ebenfalls durch eine Verbindungsplatte 27 mittels Kunststoffmasse 32' dichtend abgeschlossen. Der dadurch gebildete Fluidraum 14' im quaderförmigen Filtermodul FM ist mit mindestens einer Öffnung 15' in einer stirnseitigen Abschlußplatte 27 ausgestattet.

Auf der Anströmseite, d.h. auf der Trübraumseite, sind in das Dichtungselement einseitig oder beidseitig vorstehende Abstandshalter 31 angeformt, die entlang des Dichtungsrandes Durchlässe 29 bilden. Die Abstandshalter 31 können dabei gemäß Fig. 1 auch mehr oder weniger weit in die Filterfläche mittels integrierter fingerförmiger Fortsätze 31' mit Stützfunktion hineinragen, ohne daß diese eine innige Verbindung mit der Oberfläche der Filterzuschnitte 16 eingehen müssen. Bei entsprechender Eigenfestigkeit - auch im Naßzustand - und relativ kleinem Abstand zwischen innerem und äußerem Dichtungselement 32, kann auf der Trübraumseite auf zusätzliche Stützelemente 17 (Gewebe, Gitter) verzichtet werden, ohne daß dadurch die Rückspülbarkeit (Druckgefälle von innen und außen) verlorengeht, siehe Fig. 5.

Gemäß abgewandeltem Detailschnitt nach Fig. 6 liegen die Filterschichten FS beidseitig dicht auf den Stützelementen 17 auf. Es ist vorteilhaft, die Filterzuschnitte 16 im Bereich der Ränder 28 mit einer keilförmigen Prägung oder einer Fase 33 zu versehen, um dem Dichtungselement 32 mit Abstandshalter 31 bzw. der Kunststoffmasse einen besseren Halt zu geben und um den Zugang zu den offenzuhaltenen Stützelementen 17 möglichst weit offenzuhalten. Bei der Ausführungsform gemäß Fig. 6 ist die Filterschicht FS mit einem auflaminierten Membranfilter MF versehen, wie sie im Handel erhältlich sind. Die Abschlußelemente 22,27 sind durch Kunststoffplatten gebildet, die die beiden Filter stapel rahmenartig umschließen und miteinander mit den Rändern 28 und mit dem Filterstapel bei 32' (Fig. 5.6) dichtend verbunden sind.

Die in Fig. 3A und 6 dargestellte Variante mit direkt integriertem Membranfilter MF auf der Filtratseite haben nicht nur den Vorteil der Sicherheit und Prüfbarkeit, sondern gewährleisten auch ein Minimum an Produktverlust und Produktvermischung. Membranfilter wirken im benetzten Zustand gegenüber Druckluft und unterhalb des Druckwertes des Blasen-Druck-Punktes als geschlossenes Ventil, während aus vorgeschalteten Gehäusen und Filtern durch die Druckluft die gesamte Flüssigkeit ausgetrieben wird. Die Gefahr der Vermischung z.B. von Weinen bei Sortenwechsel, wie sie im üblichen reinen Schichtenfiltergeräten immer gegeben ist, kann so und mit den folgenden Varianten minimiert werden.

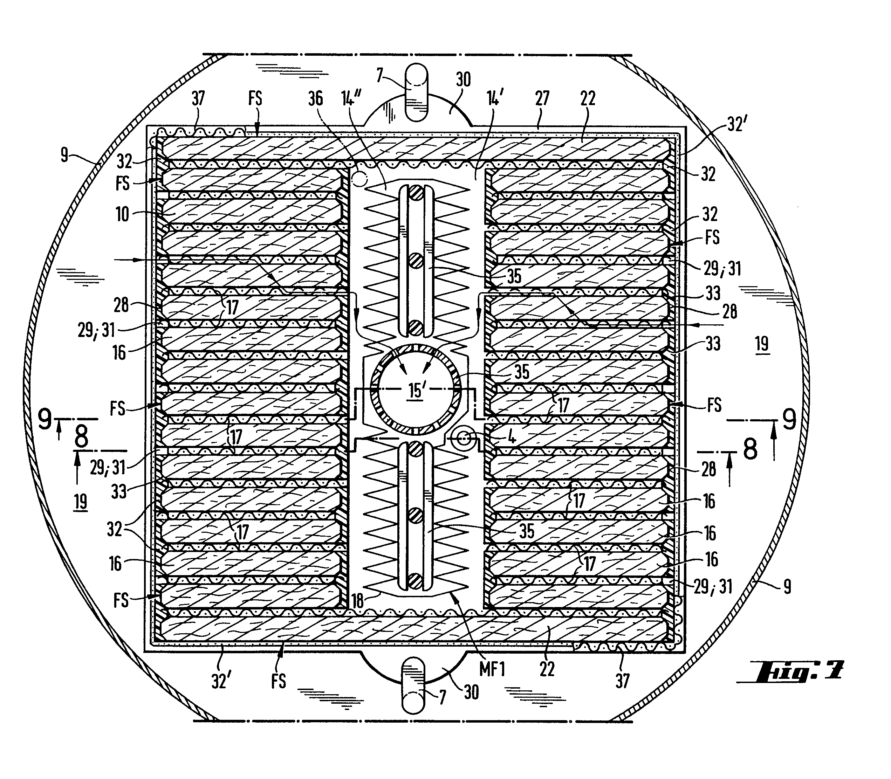

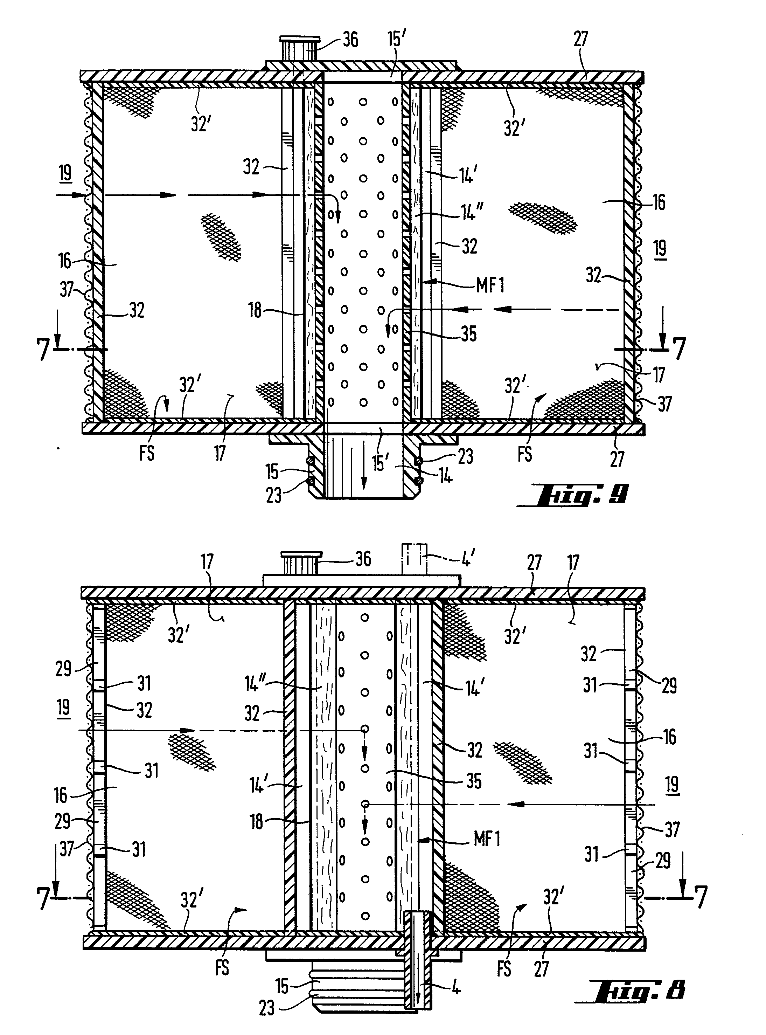

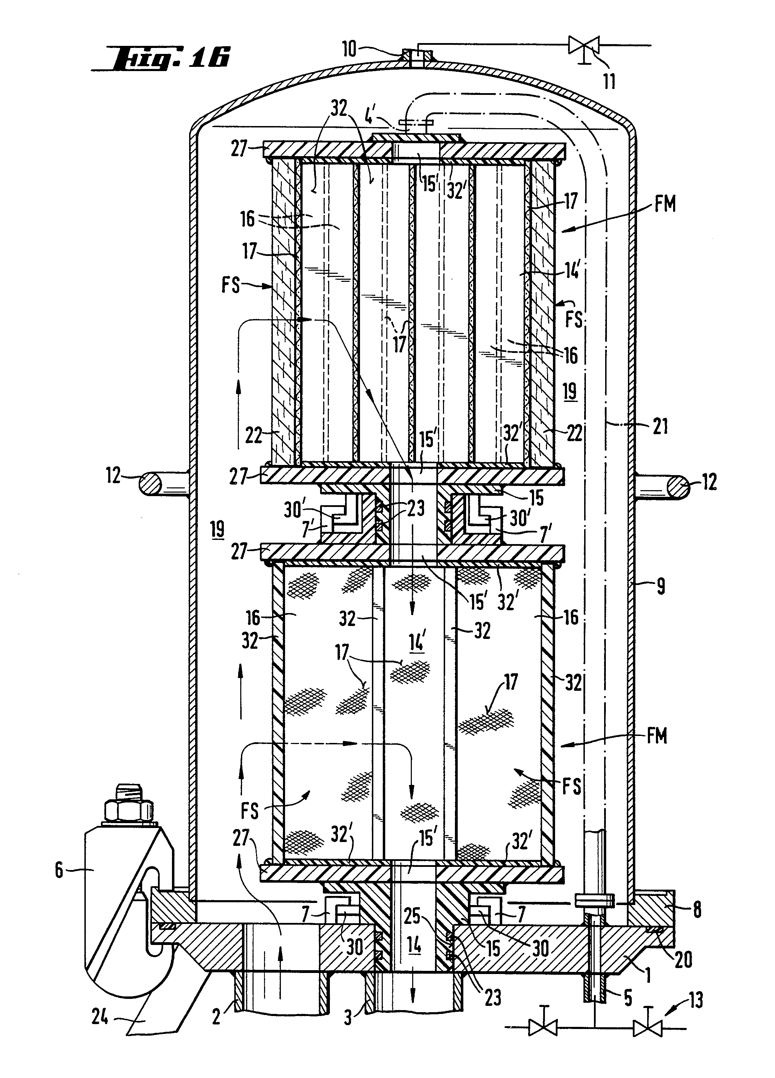

Bei der Ausführungsform gemäß Fig. 7 bis 9 ist ein Filtermodul FM gemäß Fig. 5 dahingehend modifiziert worden, daß im Fluidraum 14' - dem Freiraum zwischen den beiden Filterstapeln - ein plissiertes, rohrförmiges Membranfilterelement MF1 angeordnet ist, welches stirnseitig mit den Abschlußelementen 27 leckdicht dauerhaft verbunden oder lösbar adaptiert ist. Der durch die Plissierung 18 gebildete Freiraum bildet seinerseits wieder einen Fluidraum 14". Die Plissierung 18 ist innenseitig durch perforierte Stützelemente 35 abgestützt und gegen Rückstau durch die Innenseite des Fluidraumes 14' abgestützt. Der innere Fluidraum 14" mündet in einem Anschlußadapter 15, welcher mit Hilfe von Ringdichtungen 23 an den Auslaß eines umschließenden Gehäuses 9 anschließbar ist. In Umfangsrichtung kann das Filtermodul FM durch eine perforierte Rückstausicherung 37 in Form eines grobmaschigen Gewebes oder dgl. umwickelt sein. Über Verriegelungsnasen 30 des Filtermoduls FM und Verriegelungselemente 7 des Gehäuses 9 läßt sich das Filtermodul FM im Gehäuse 9 in axialer Richtung festlegen. Durch einen zusätzlichen Anschluß 4 läßt sich auch der Fluidraum 14' - (Vorfiltratraum) separat mit Fluid versorgen und entsorgen. Dieser ist vorzugsweise in der oberen Verbindungsplatte 27 als Anschluß 4' angeordnet und über ein im Fluidraum 19 geführtes Rohr 21 mit flexibler Verbindung mit Füllmittel über den Anschluß 5 (Fig. 16) und Ventilanordnung 13 im Gehäuseunterteil 1 versorgbar und entsorgbar. Das relativ kurz ausgebildete Modul nach Fig. 8 und 9 kann auch länger ausgeführt und der Höhe eines Gehäuses nach Fig. 16 angepaßt sein.

Mit einem Filtermodul nach Fig. 6 bis 10 lassen sich somit Stufenfiltrationen durchführen.

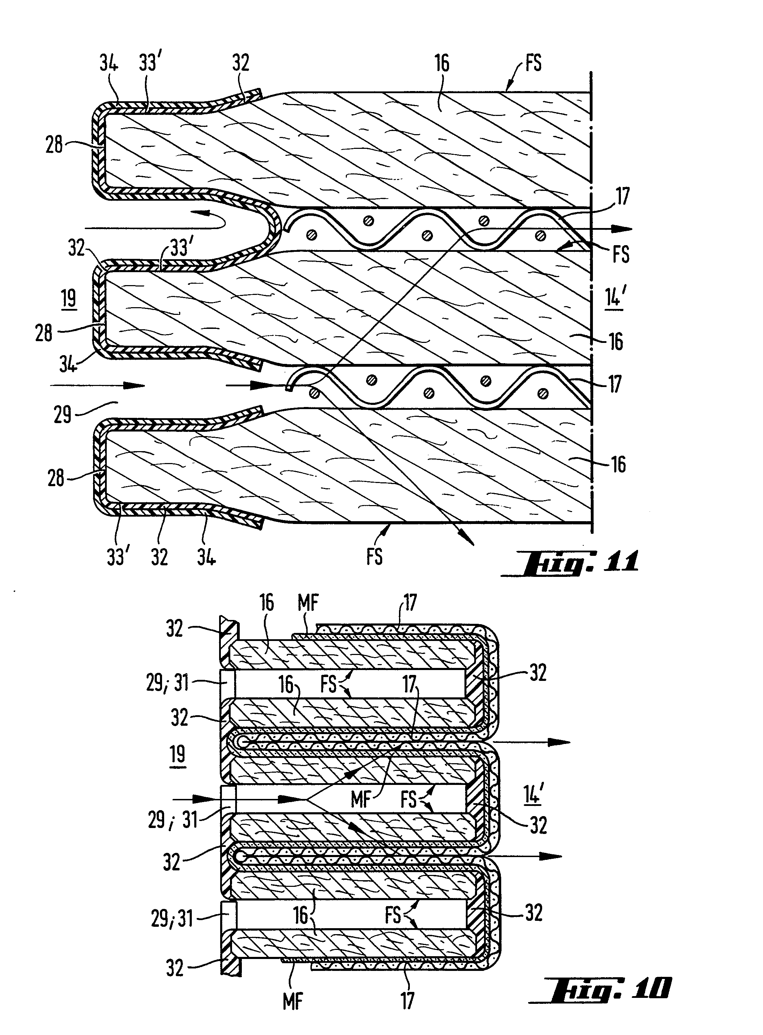

Bei der in Fig. 10 schematisch dargestellten Grundeinheit sind die Schichtenfilterelemente im Verhältnis 1:1 mit einem Membranfilter MF verarbeitet, wobei die Membran entweder in die Dichtungsmasse der Dichtungselemente 32 steif eingebettet sein kann oder aber frei von der Dichtungsmasse eine Art Scharnierwirkung übernehmen kann. Je nach Filtrationsrichtung befindet sich der Membranfilter MF innen oder außen, d.h. immer auf der Filtratseite.

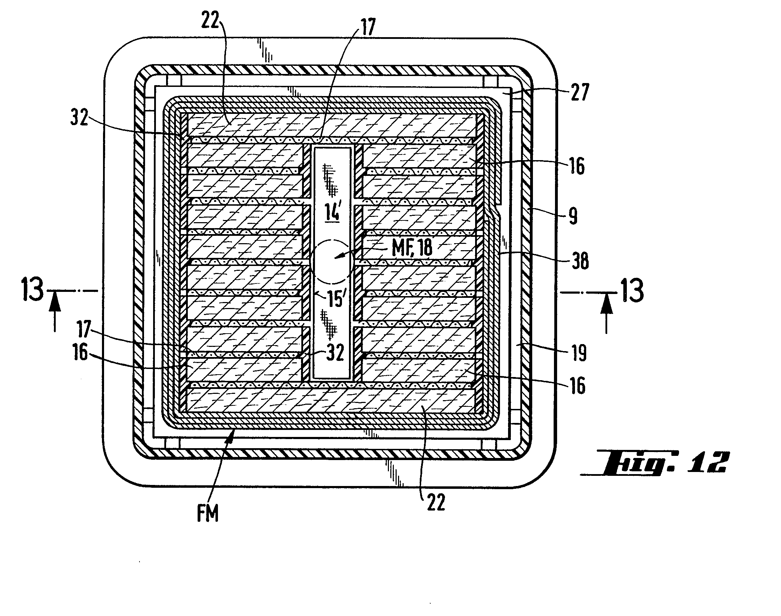

In der Ausführungsform gemäß Fig. 11 sind die rechteckigen Filterzuschnitte 16 mit einer sich zum abzudichtenden Rand 28 hin verjüngenden Prägung 33' versehen. Diese geprägten Kanten 33' sind mit einer mit dem Dichtungsmaterial 32 beschichteten Folie oder Vlies 34 umhüllt, die im Bereich der offenzuhaltenden Stützelemente 17 durchtrennt ist, so daß die Fluidführung im Retentatraum in die Stützelement 17 hinein und die Fluidführung aus den Stützelementen 17 heraus in den Permeatraum gewährleistet ist.

Mit Hilfe dieser fluiddichten Folie 34 bzw. einem entsprechend dichten Vlies läßt sich die Elastizität der Dichtungselemente 32 in Verbindung mit den Zuschnitten aus Filterschichten 16 verbessern. Anstelle einer fluiddichten Folie 34 können auch Vliese und/oder Filtermembranen mit guter Eigenfestigkeit verwendet werden, wenn diese in ihrem Rückhaltevermögen zumindest so gut sind wie das der Filterzuschnitte 16. Anstelle der durchgehenden Bahn 34 können auch von vornherein entsprechende Abschnitte verwendet werden.

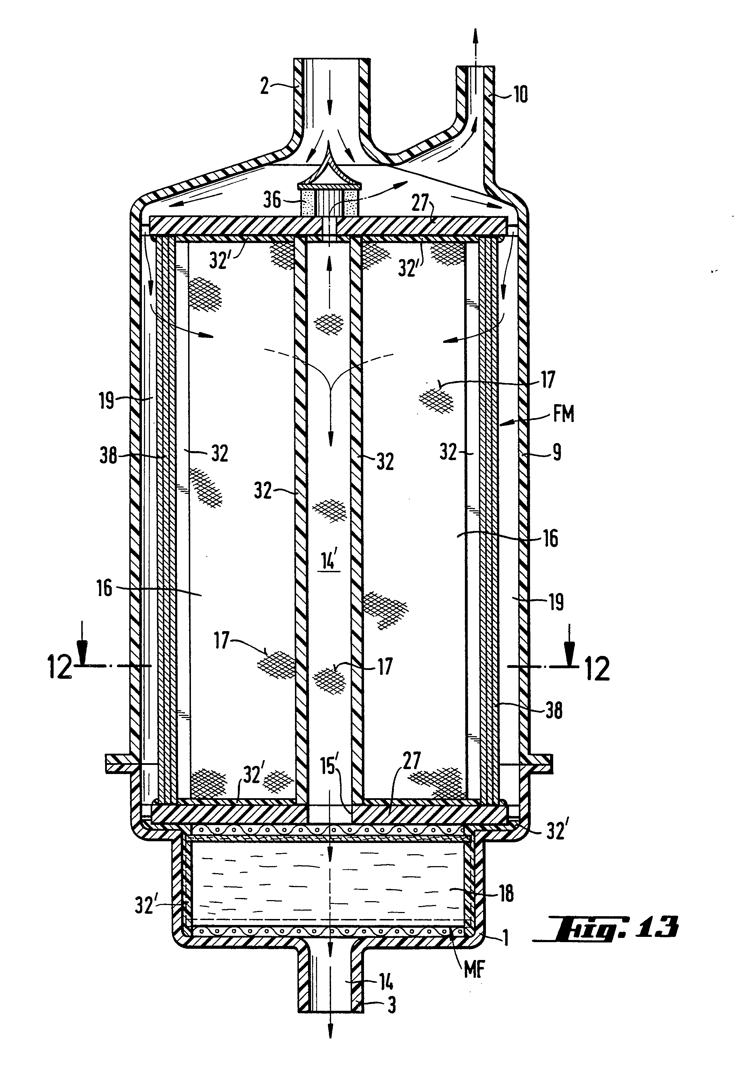

In der bevorzugten Ausführungsform gemäß Fig. 12 und 13 ist das Filtermodul FM und Gehäuse 1,9 mit Anschlüssen 2,3,10 als relativ kleinformatige Baueinheit in Form eines Disposables dargestellt. Das in seiner Grundeinheit etwa gemäß Fig. 5 und 7 aufgebaute Filtermodul FM weist außenseitig eine Rückstau- bzw. Drucksicherung auf, die als Umwicklung 38 das gesamte Filtermodul FM in Umfangsrichtung stabilisiert. Die Umwicklung 38 kann sowohl ausschließlich Tiefenfilter als auch Membranfilter enthalten. Im ersten Fall wird z.B. von außen nach innen filtriert und die vorgeschaltete Umwicklung 38 dient zum Schutz und zur Standzeiterhöhung des Schichtenfilterelementes. Im zweiten Fall wird bei der Verwendung eines Membranfilters MF von innen nach außen filtriert und es gelten die vorstehend beschriebenen Überlegungen. Weiterhin läßt sich das Flächenverhältnis Schichtenfilter : Membranfilter auf diese Weise recht variabel gestalten.

Um diese beiden Varianten zu verdeutlichen, sind gemäß Fig. 13 in dem umgebenden Filtergehäuse 1,9 aus Kunststoff mit den Anschlußstutzen 2,3,10 ein Filtermodul FM gemäß Fig. 12 angeordnet und zwar mit außen liegender Umwicklung 38 in Form eines Tiefenfilters und zur Bildung einer Stufen filtration stromabwärts eine Filterkassette (Plissierung 18) mit einem plissierten Membranfilter MF angeordnet. Der Fluidraum 14' des Filtermodules FM geht unter Zwischenschaltung des Membranfilters MF in den Fluidraum bzw. Filtratraum 14 über. In diesem Fall wird die Trübe durch den Stutzen 2 in den Fluidraum 19 eingeleitet und tritt als Filtrat aus dem Fluidraum 14 mit Stutzen 3 aus. Die Öffnung 15' in dem Abschlußelement 27 ist hier als Schlitz ausgebildet. Ein kleiner Gasfilter 36 in der oberen Verbindungsplatte 27 sorgt für eine - schnelle Entgasungsmöglichkeit für den Fluidraum 14', so daß eine erleichterte Integritätsprüfung des Membranfilterelementes MF nach üblichen Prüfmethoden gegeben ist, da nicht der Widerstand im Schichtenfilter überwunden werden muß. Entsprechend ist das Filtermodul nach Fig. 7 bis 9 mit einem kleinen Gasfilter 36 ausgestattet.

Wird das Filtermodul FM von innen nach außen betrieben, bildet der Stutzen 3 den Einlaß für die Trübe, die Plissierung 18 den Vorfilter, die Filterschichten FM die zweite Stufe und die Umwicklung 38 die Endfilterstufe. Der Anschluß 10 dient zur Entlüftung des Gehäuses an der höchsten Stelle.

Werden derartige Filtermodule nach Fig. 13 nicht als Disposable ausgebildet, sondern in Edelstahlgehäusen gemäß Fig. 7 und 16 eingesetzt, so kann durch eine lösbare Verbindung zwischen dem Filtermodul FM mit Vorfilter und Schichtenfilter einerseits und der Membranfilterkassette 18 andererseits der jeweils erschöpfte Teil des Gesamtmoduls gegen ein neues ausgetauscht werden, um die Gesamtstandzeit des Filterelementes zu erhöhen.

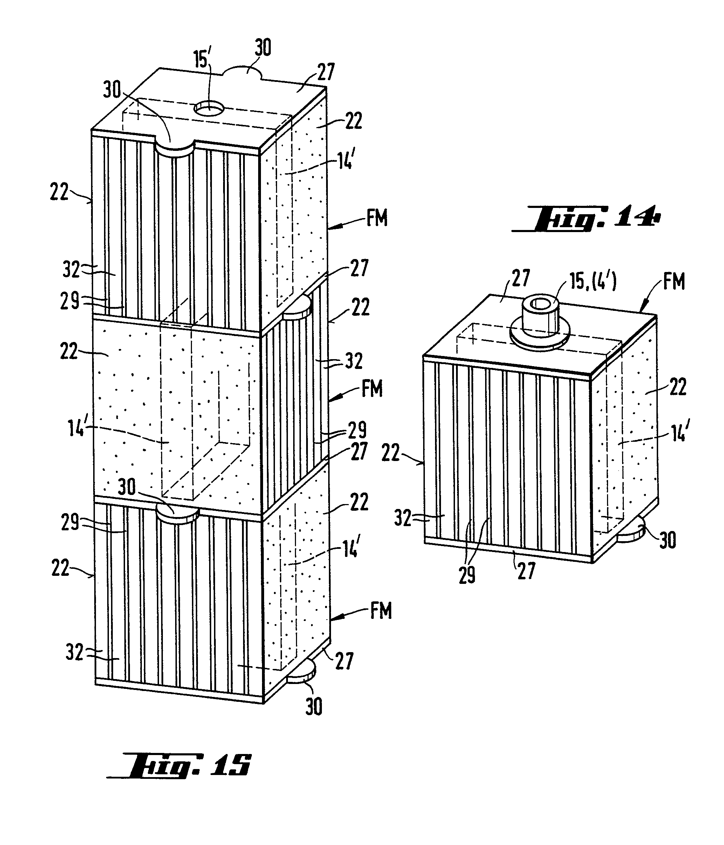

Gemäß Fig. 14 und 15 sind die einzelnen Filtermodule FM entweder durch Schweißung oder Klebung dauerhaft zu einem Gesamtelement verbunden oder aber mit Hilfe von Ringdichtungen und Steckadaptern, siehe Fig. 16, lösbar miteinander verbunden. In beiden Fällen können die Abmessungen der Filtermodule FM den auf dem Markt befindlichen Stahlgehäusen angepaßt werden, welche auch zur Aufnahme anderer Filterelemente dienen.

Um dies noch einmal zu verdeutlichen, ist in Fig. 16 ein typisches Filtergehäuse für Filtrationen in der Getränkeindustrie dargestellt. Dieses hat z.B. einen Innendurchmesser von 317 mm und eine Innenhöhe von etwa 1.300 mm.

Das vorstehend näher beschriebene quaderförmige Filtermodul FM aus Schichtenfilterelementen gemäß Fig. 5 (bzw. 7 bis 8) ist in einem umgebenden Gehäuse aus Edelstahl einsetzbar. Das Gehäuse besteht aus einer Gehäusebasis 1 mit mindestens zwei Anschlußstutzen 2,3 für die Versorgung und Entsorgung des auf Gehäusebein 24 abgestützten Gehäuses 1-12. Das glockenförmige Gehäuseoberteil 9 mit einem Verstärkungskranz 8 ist unter Zwischenlage von elastischen O-Ringdichtungen 20 mit Hilfe von über den Umfang verteilt angeordneten Spannelementen 6 oder einem Schnellverschluß dichtend mit der Gehäusebasis 1 verbunden. Das Gehäuseoberteil 9 hat an seiner höchsten Stelle einen Entlüftungsstutzen 10 mit einer Ventilanordnung 11. Das Gehäuseoberteil 9 kann mit Hilfe der Handgriffe 12 nach Lösen der Spannelemente 6 ganz von der Gehäusebasis 1 entfernt werden, so daß für die Bestückung und Entfernung des oder der Filtermodule FM die Gehäusebasis 1 auch von innen her frei zugänglich ist. Der zentral angeordnete Stutzen 3 geht in eine Gehäusedurchbrechung über, die bei herkömmlicher Filtrationsrichtung den eigentlichen Sterilraum 14 bildet, und das vorstehend näher beschriebene Filtermodul FM greift mit seinem Abschlußelement 27 mit Stutzen 15 mittels O-Ringdichtungen 23 in diese Gehäusedurchbrechung 25 ein. Mehrere über den Umfang der Gehäusebasis angeordnete Verriegelungselemente 7 können mit Verriegelungsnasen 30 am Abschlußelement 27 bzw. Stutzen 15 in Eingriff gebracht werden, so daß das Filtermodul FM insgesamt in axialer Richtung verriegelt ist und gegen einen Rückstau aus dem Auslaßstutzen 3 gesichert ist.

In gleicher Weise ist das obere Filtermodul FM über Verriegelungselemente 7',30' mit dem unteren Filtermodul FM verbunden, die, wie hier dargestellt, um 90° gegeneinander verdreht und entsprechend im Schnitt gezeigt sind.

Diese Verriegelung ist in jedem Fall notwendig, da die verschiedenen Medien wie das zu filtrierende Fluid, Spülmittel, Heißwasser oder Gas sowohl von der einen Richtung als auch von der anderen Richtung in das Filtermodul eingeleitet werden können. Die erfindungsgemäßen Filtermodule aus Filterschichten FS sind in beiden Richtungen betreibbar.

Es ist auch möglich, das Bauprinzip nach Fig. 12 und 13 für ein Gehäuse nach Fig. 16 zu modifizieren, indem das Kunststoffgehäuseoberteil 9 nach Fig. 12,13 entfällt und das Filtermodul FM nach Fig. 12,13 mit der im Kunststoffgehäuseunterteil 1 gekapselten Plissierung 18 mittels Anschlußadapter 15 mit dem Gehäuseunterteil 1 nach Fig. 16 verbunden wird.

Der in Fig. 16 außer Funktion gesetzte Anschluß 5 mit Ventilanordnung 13 und das im Fluidraum 19 bis zum oberen Modulende führbare Rohr 21 mit nicht dargestellter flexibler Kupplung am Rohrende dient zur bedarfsweisen zusätzlichen Fluidführung (Spülflüssigkeit, Prüfmittel, Füllmittel) ins Innere eines Moduls z.B. nach der modifizierten Bauform nach Fig. 7 bis 9 oder nach Fig. 12 und 13. Bei dem Modul nach Fig. 13 kann dabei der Gasfilter 36 durch einen Anschlußstutzen ersetzt sein.

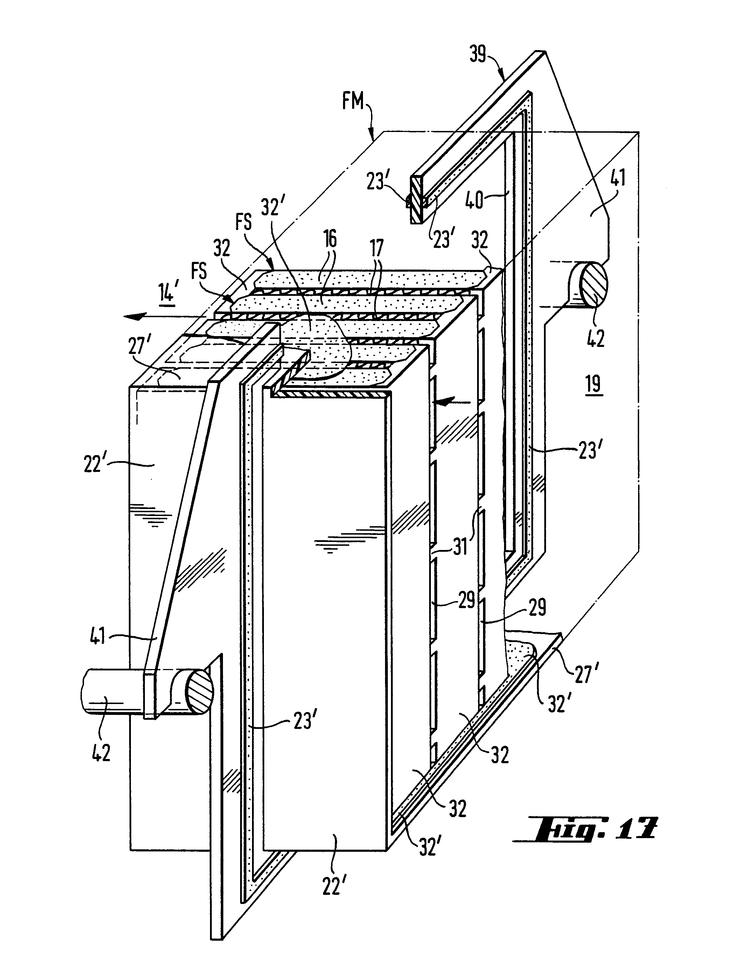

Bei dem in Fig. 17 dargestellten Filtermodul sind die zu einem Stapel verbundenen Zuschnitte 16,17 der Filterschichten FS durch Seiten- und Stirnplatten 22',27' entsprechend den vorher beschriebenen Abschlußelementen 22,27 eingefaßt und mit diesen in einem Tragrahmen 39 mit Rahmenöffnung 40 integriert. Der Tragrahmen 39 aus Kunststoff weist eine umlaufende Ringdichtung 23' und seitlich abstehende Führungsnasen 41 zur Halterung an Führungsholmen 42 eines nicht dargestellten Schichtenfiltergerätes auf, wie es zum Stand der Technik nach der DE-OS 35 05 792 gehört. Durch diese Anordnung läßt sich der bei solchen bekannten Schichtenfiltergeräten vorhandene Gehäuseraum mit sehr viel größerer Schichtenfilterfläche ausnutzen, als es bei bisher üblicher einfacher Lage möglich war. Das Filtermodul FM kann sowohl einseitig als auch beidseitig vorstehend im Tragrahmen 39 befestigt sein.

**Ansprüche**

1. Aus flachen, randseitig abgedichteten Schichtenfilterelementen mit drainierenden Stützelementen stapelförmig aufgebautes Filtermodul zur Filtration von Flüssigkeiten, welches in ein Gehäuse mit Versorgungs- und Entsorgungsanschlüssen derart einsetzbar ist, daß Fluid von einem Fluidraum in einen anderen Fluidraum nur durch die Filterelemente gelangen kann, dadurch gekennzeichnet, daß die Schichtenfilterelemente (FS) durch mehrere streifenförmige, kongruente und gestapelte Zuschnitte (16) gebildet sind, deren Ränder (33,33′) an zwei gegenüberliegenden Seiten des Stapels zur Bildung jeweils nach einer Randseite offener Taschen paarweise durch ein Dichtungselement (32) in Form einer im Flüssigzustand aufgebrachten und aushärtbaren Kunststoffmasse unter drainierender Beabstandung eingefaßt sind und die Stirnflächen des Stapels durch Kunststoffmasse (32′) insgesamt verschlossen sind, wobei die zur einen Seite offenen Taschen einem ersten Fluidraum und die anderen offenen Taschen einem anderen Fluidraum eines Gehäuses zuzuordnen sind.

2. Filtermodul nach Anspruch 1, dadurch gekennzeichnet, daß das Dichtungselement (32) zur Beabstandung benachbarter Dichtungselemente (32) angeformte Abstandshalter (31) mit in Längsrichtung der Taschenöffnung verlaufender Durchlässen (29) aufweist und die angeformten Abstandshalter (31) bedarfsweise in die Taschentiefe hineinragende fingerförmige Fortsätze (31′) aufweisen.

3. Filtermodul nach Anspruch 1, dadurch gekennzeichnet, daß die drainierenden Stützschichten (17) durch Kunststoffgitter oder Kunststoffgewebe gebildet sind.

4. Filtermodul nach Anspruch 1, dadurch gekennzeichnet, daß in die Kunststoffmasse des Dichtungselementes (32) eine fluiddichte Folie (34) als U-förmige Verstärkung eingebettet ist.

5. Filtermodul nach Anspruch 1, dadurch gekennzeichnet, daß in die Kunststoffmasse (32) ein Vlies und/oder Membranfilter als Verstärkung eingebettet ist, deren Rückhaltevermögen das der verbundenen Filtermaterialien (16) zumindest gleichwertig ist.

6. Filtermodul nach Anspruch 1 bis 5, dadurch gekennzeichnet, daß die die Kunststoffmasse (32) aufnehmenden Kanten der Filterzuschnitte (16) im Querschnitt durch Prägung oder Fräsung verjüngt gestaltet sind bzw. Fasen (33,33′) aufweisen.

7. Filtermodul nach Anspruch 1 bis 6, dadurch gekennzeichnet, daß die Kunststoffmasse (32) aus Polypropylen (PP) gebildet ist.

8. Filtermodul nach einem der vorhergehenden Ansprüche, dadurch gekennzeichnet, daß jeweils zwei einander zugekehrte und durch ein Stützelement (17) auf Abstand gehaltene Flächen einer Filterschicht (FS) eine flächige Beschichtung in Form eines Vlieses (FV), einer Membran (FM) oder eines Filterwirkung aufweisenden Kartons haben.

9. Filtermodul nach Anspruch 1 bis 8, dadurch gekennzeichnet, daß die drainierenden Stützelemente (17) in der Kunststoffmasse (32′) der stirnseitigen Abdichtung fixiert sind.

10. Filtermodul nach einem der Ansprüche 1 bis 9, dadurch gekennzeichnet, daß dieses im wesentlichen quaderförmig oder rechteck-säulenförmig aufgebaut ist, aus einem ersten Stapel rechteckiger Zuschnitte (16) von Filterschichten (FS) mit drainierenden Stützelementen (17) und einem zweiten parallel und im Abstand dazu verlaufenden Stapel aus miteinander verbundenen und gegeneinander abgedichteten Zuschnitten (16) von Filterschichten (FS) und drainierenden Stützelementen (17) gebildet ist, deren in einer Ebene liegenden Endflächen der beiden Stapel durch den Zwischenraum (14′) zwischen beiden Stapeln überbrückende Abschlußelemente (22) verbunden sind, und daß die Stirnseiten beider Stapel mit diese dichtend abschließende und den Zwischenraum (14′) beider Stapel überbrückende Abschlußelemente (27) abgeschlossen sind, wobei der Freiraum (14′) zwischen den beiden Stapeln durch mindestens eine in den Abschlußelementen (27) angeordnete Öffnung (15,15′) mit Fluid versorgbar und entsorgbar ist.

11. Filtermodul nach Anspruch 10, dadurch gekennzeichnet, daß der Freiraum im Modul durch ein einen eigenständigen Fluidraum (14″) mit Fluidanschluß (15) bildendes Membranfilterelement (MFI) in zwei Fluidräume (14′ und 14″) aufgeteilt ist und der stromaufwärts dem Membranfilterelement (MFI) vorgelagerte Fluidraum (14′) bedarfsweise einen Gasfilter (36) und/oder mindestens einen Anschlußstutzen (4) aufweist.

12. Filtermodul nach Anspruch 10, dadurch gekennzeichnet, daß an der stromabwärts liegenden Stirnseite des Schichtenfiltermoduls ein an dessen inneren Fluid raum (14′) anschließendes Membranfilterelement (18) in plissierter, rechteckiger Form angeschlossen ist, dessen stromabwärts liegende Faltenseite mit einem die Plissierung (18) dichtend umgreifenden Anschlußadapter (1,3) ausgestattet ist.

13. Filtermodul nach Anspruch 12, dadurch gekennzeichnet, daß der innere Fluidraum (14′) des Schichtenfiltermoduls bedarfsweise mindestens einen eigenen Anschlußstutzen und/oder Gasfilter (36) hat.

14. Filtermodul nach einem der vorhergehenden Ansprüche, dadurch gekennzeichnet, daß dieses durch durchlässige, gegebenenfalls filtrierende Verstärkungselemente (37,38) gegen innere Druckbelastung umschlossen ist.

15. Filtermodul nach Anspruch 10, dadurch gekennzeichnet, daß durch ein umschließendes integriertes Kunststoffgehäuse (1,2) mit Anschlüssen (2,3,10) eine Einwegeinheit eines Filtergerätes gebildet ist.

16. Filtermodul nach Anspruch 10, 11, 12, 13 und 14, dadurch gekennzeichnet, daß durch ein umschließendes integriertes Kunststoffgehäuse (1,2) mit Anschlüssen (2,3,10) eine Einwegeinheit eines Stufenfiltergerätes gebildet ist.

17. Filtermodul nach Anspruch 10 bis 16, dadurch gekennzeichnet, daß der innere Fluidraum (14') wahlweise ein Füllmedium wie Aktivkohle, Ionaustauscher, Absorbtionsmedium, Katalysator, Kieselgur, Zeta-Material, bakterizide Medien, Bakterien, Hefen und/oder bioaktive Stoffe aufweist oder über einen Anschlußstutzen (4) damit füllbar ist.

18. Filtermodul nach einem der Ansprüche 1 bis 9, dadurch gekennzeichnet, daß ein Stapel verbundener Zuschnitte (16) von Filterschichten (FS) von einem integrierten Rahmen (22',27') umschlossen ist, der seinerseits mit einem Tragrahmen (39) aus Kunststoff mit Rahmenöffnung (40), umlaufender Rahmendichtung (23') und seitlichen Führungsnasen (41) zu einer in ein Schichtenfiltergerät einsetzbare Filterkassette integriert ist.

*Fig. 1*

*Fig. 2 B*

*Fig. 2 A*

*Fig. 3 A*

*Fig. 3 B*

*Fig. 4*

**Fig. 5**

Fig. 6

Fig. 7

0 291 883

Fig. 9

Fig. 8

*Fig. 11*

*Fig. 10*

Fig. 12

*Fig. 13*

**Fig. 14**

**Fig. 15**

Fig. 16

**Fig. 17**